Europäisches Patentamt

European Patent Office

Office européen des brevets

(19)

(11) Numéro de publication: **0 064 426**
**B1**

(12) # FASCICULE DE BREVET EUROPEEN

(45) Date de publication du fascicule du brevet:
14.05.86

(51) Int. Cl.⁴: **B 65 G 67/20,** B 65 G 67/08

(21) Numéro de dépôt: **82400552.4**

(22) Date de dépôt: **26.03.82**

(54) **Enwagonneuse semi-automatique.**

(30) Priorité: **15.04.81 FR 8107585**

(43) Date de publication de la demande:
**10.11.82 Bulletin 82/45**

(45) Mention de la délivrance du brevet:
**14.05.86 Bulletin 86/20**

(84) Etats contractants désignés:
**AT BE CH DE GB IT LI LU NL SE**

(56) Documents cités:
**DE - A - 1 481 347**
**FR - A - 1 361 570**
**FR - A - 1 510 214**
**FR - A - 2 036 787**
**FR - A - 2 462 373**

(73) Titulaire: **Etablissements Boubiela Société Anonyme,
20bis, Boulevard Léon-Blum, F-02104 Saint-Quentin (FR)**

(72) Inventeur: **Noel, Jean-Marie, 20, rue Geoffroy-St-Hilaire,
F-02100 Saint-Quentin (FR)**

(74) Mandataire: **Laget, Jean-Loup et al, Cabinet Pierre
Loyer 18, Rue de Mogador, F-75009 Paris (FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne une enwagonneuse semi-automatique, c'est-à-dire une machine pour le chargement semi-automatique de sacs dans des wagons.

Le problème à résoudre est celui du chargement direct des sacs dans les wagons, en lits superposés, à une cadence élevée, avec la seule intervention d'un surveillant au pupitre de commande.

Il est connu par le document FR-A-1 361 570 de réaliser une machine à décharger les wagons avec une première flèche susceptible de déplacements verticaux sur un bâti et portée aux extrémités par des supports creux. Mais cette première flèche est prolongée par une deuxième flèche susceptible de basculer autour d'un axe horizontal.

Il est également connu par le document FR-A-1 510 214 de charger des wagons comportant une flèche articulée dont le premier élément est un parallélogramme déformable dans le plan vertical. Cette réalisation ne permet pas d'éviter le gauchissement de la flèche lorsque les éléments qui la constituent sont décalés angulairement. En outre, cette machine ne permet pas de faire du chargement automatique, car elle ne comporte pas de table de dépose en bout de flèche.

L'un des buts de l'invention est de proposer une machine de chargement semi-automatique de sacs dans les wagons, dont la flèche soit suffisamment rigide pour ne pas être soumise à un gauchissement en cours de fonctionnement.

Un autre but de l'invention est de proposer une machine susceptible d'assurer le chargement de wagons de types différents sans modification ni adaptation particulière de la machine.

Un autre but enfin de l'invention est de proposer une machine munie d'une table basculante dans des directions opposées, et susceptible d'autres mouvements.

L'invention a pour objet une enwagonneuse semi-automatique du type tel que révélé par FR-A-1 510 214, comportant un bâti déplaçable dans un plan horizontal, une première flèche articulée sur un corps disposé sur le bâti, une deuxième flèche articulée sur la première et une troisième flèche articulée sur la deuxième, les points de pivotement pour chaque articulation étant situés selon un axe vertical, caractérisée en ce que le corps est déplaçable verticalement par rapport au bâti, en ce que les points de pivotement entre le corps et la première flèche et ceux entre la première et la deuxième flèche sont situés l'un au-dessus, l'autre en-dessous des tapis transporteurs disposés dans des structures tubulaires constitutives des première et deuxième flèches et du corps et en ce que la troisième flèche est munie d'un tapis télescopique.

Selon d'autres caractéristiques de l'invention:
— la troisième flèche porte une table de dépose des sacs, orientable, et susceptible de basculement d'un côté ou de l'autre;

— la table de dépose des sacs est munie de vérins d'inclinaison susceptibles de lui donner une inclinaison à droite ou à gauche;

— la table de dépose des sacs est munie de vérins de relevage susceptibles de la soulever pour une course complémentaire verticale,

— la table de dépose des sacs est munie de vérins de basculement susceptibles d'assurer le basculement de la table autour de l'un de ses bords,

— la table de dépose des sacs comporte des manchons évidés selon un secteur cylindrique, leurs ouvertures étant décalées; de sorte que si une ouverture libère un côté de la table pour autoriser un basculement, l'autre ouverture soit orientée pour assurer un verrouillage de l'autre côté de la table.

D'autres caractéristiques ressortiront de la description qui suit faite avec référence au dessin annexé sur lequel on peut voir:

Figure 1, une vue latérale d'une enwagonneuse semi-automatique selon l'invention;

Figure 2, une vue de dessus de l'enwagonneuse de la figure 1;

Figure 3, une vue de dessus de la première phase de chargement d'un wagon de type G4;

Figure 4, une vue de dessus de la deuxième phase de chargement d'un wagon de type G4;

Figure 5, une vue de dessus de la première phase de chargement d'un wagon de type G8;

Figure 6, une vue schématique de bout de la table de dépose montrant son système d'inclinaison;

Figure 7, une vue schématique de bout de la table de dépose montrant son système de basculement;

Figure 8, une vue schématique en coupe transversale de la table de dépose montrant son dispositif d'articulation et de verrouillage pendant le basculement;

Figure 9, une vue de bout de la table de dépose montrant la table en position surélevée après sa course verticale complémentaire;

Figure 10, un schéma de dessus de l'enwagonneuse selon l'invention montrant tous les mouvements possibles des différents constituants de la machine, à l'exception de la table de dépose.

En se reportant au dessin, on peut voir un bâti 1 monté déplaçable en translation transversale sur des traverses 2, 3 elles-mêmes montées déplaçables longitudinalement sur des rails 4, 5 disposés sur un quai 6, perpendiculairement à une voie de chemin de fer sur laquelle circulent les wagons.

Les moyens de déplacement du bâti par rapport aux rails et par rapport aux traverses sont classiques.

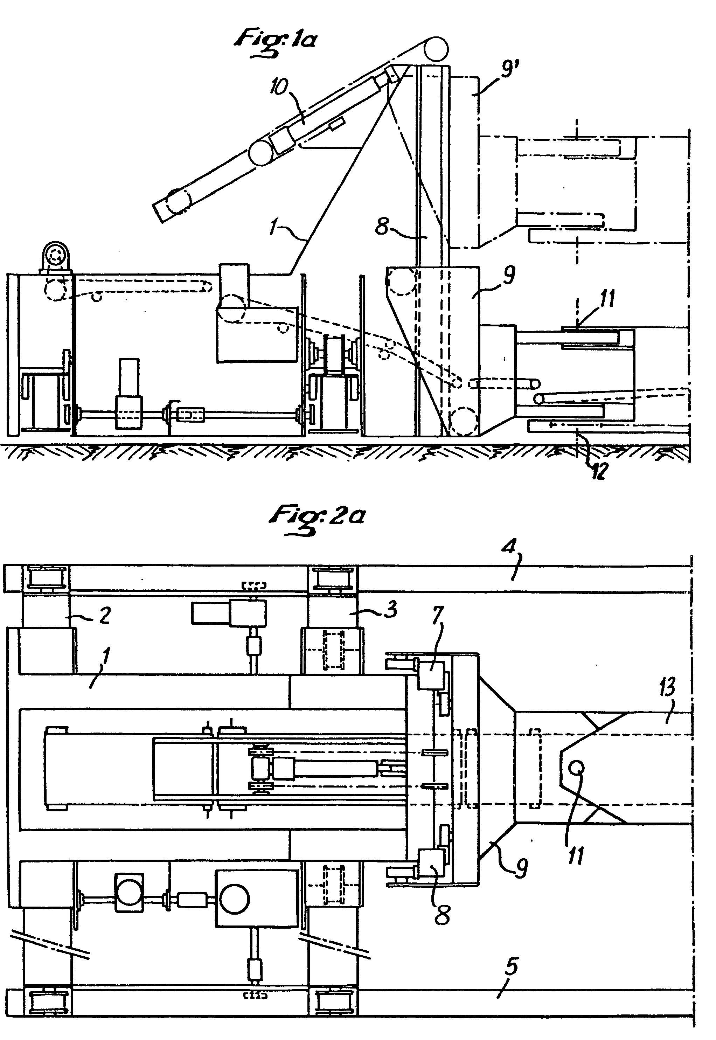

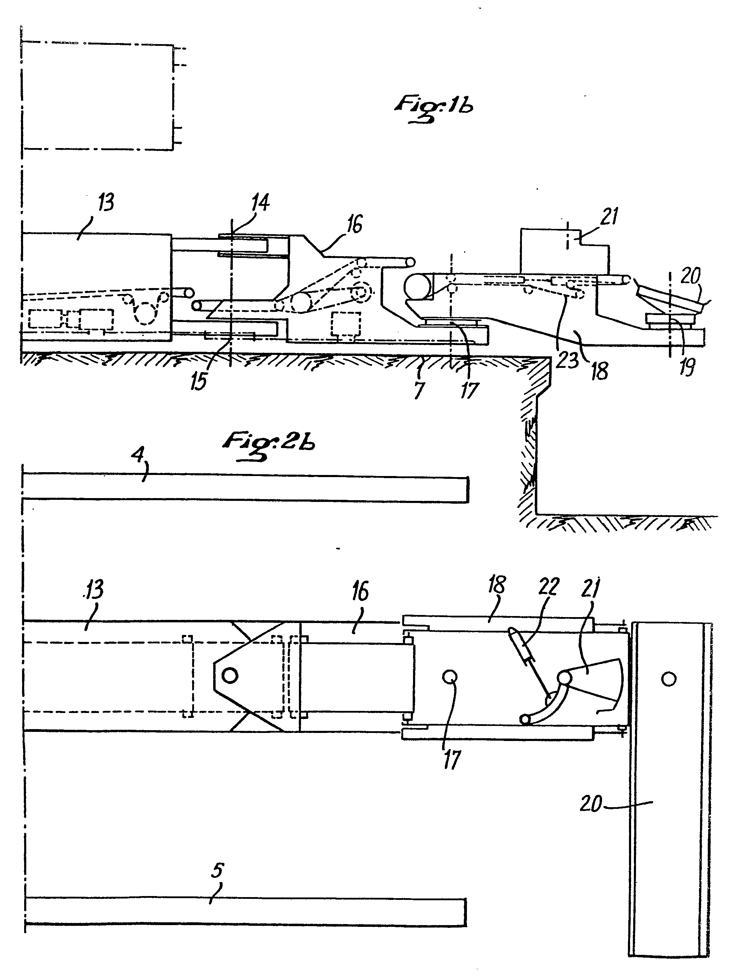

Le bâti présente deux colonnes verticales 7 et 8 le long desquelles peut se déplacer un corps 9 sous l'action d'une transmission à chaînes commandée par un vérin 10. Lorsque le vérin 10 s'étend, le corps 9 monte le long des colonnes 7, 8 jusqu'à la position 9' représenté en pointillé sur la figure 1.

Sur le corps 9 s'articule par deux points de pivotement 11 et 12, une première flèche 13. A l'extrémité de cette première flèche 13, s'articule sur deux points de pivotement également 14 et 15, une deuxième flèche 16 moins longue que la première. A l'autre extrémité de la deuxième flèche 16 s'articule sur un plateau de pivotement 17 une troisième flèche 18. A l'extrémité de la flèche 18, la table de dépose 20 est articulée à pivotement sur un plateau 19. La troisième flèche 18 est équipée d'un déviateur de sacs 21 à vérin de commande 22.

Il faut remarquer que le corps 9 et les flèches 13 et 16 sont de structure tubulaire, ce qui leur donne une bonne rigidité et permet les articulations à deux points de pivotement, placés sur un même axe vertical. Ce type d'articulation assure une bien meilleure stabilité des différents éléments.

La structure tubulaire permet de placer à l'intérieur de la flèche les tapis transporteurs de sacs. Ces tapis transporteurs sont assez nombreux depuis l'arrière du bâti 1 jusqu'à la troisième flèche 18, et ils sont représentés en trait interrompu sur la figure 1. Seul le tapis 23 de la troisième flèche 18 est télescopique: en effet, il doit rattraper un écart lorsque la table 20 est perpendiculaire à la direction de la troisième flèche, par opposition au cas où la table 20 est dans l'axe de la flèche.

L'enwagonneuse selon l'invention est donc apte à assurer des mouvements selon trois axes perpendiculaires, et de plus les quatre articulations 11, 14, 17, 19 qui équipent sa flèche permettent des positions pour chaque élément de flèche 13, 16, 18 et la table de dépose 20, orientables de −90° à +90° par rapport à l'élément précédent.

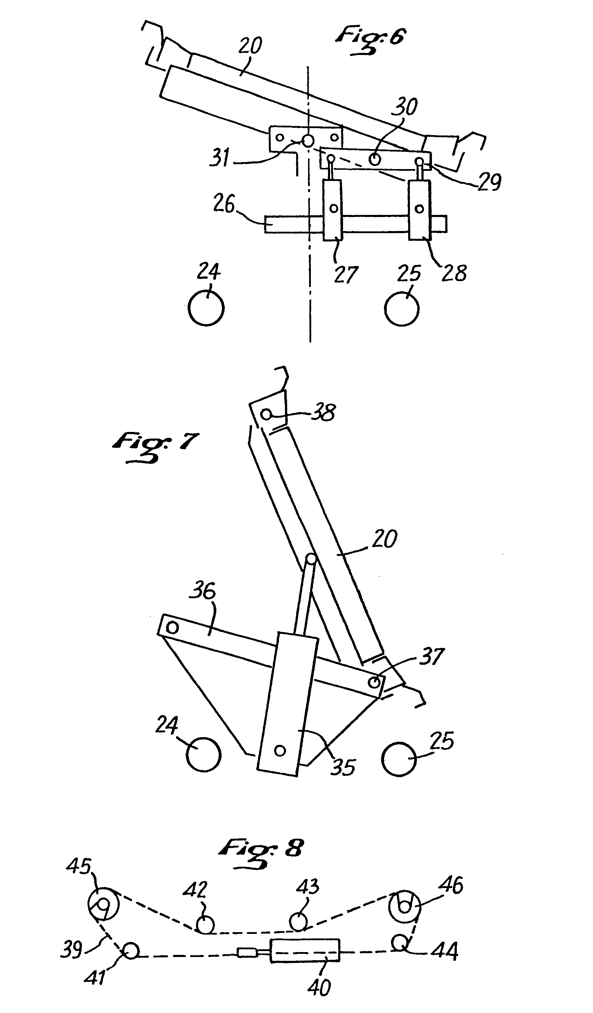

En ce qui concerne la table de dépose 20 des sacs, on voit sur la figure 6 qu'elle peut présenter une inclinaison. Cette table 20 comporte en fait une structure de base symbolisée par les deux longerons 24 et 25, et la traverse 26. Sur cette traverse sont fixés deux vérins d'inclinaison 27 et 28 dont les tiges sont articulées sur une bielle 29 dont le centre est lié à un axe 30 tourillonnant dans un palier solidaire du berceau 36 de la table 20 proprement dite.

Lorsque les deux vérins 27, 28 sont en position rétractée (cas de la figure 6), l'axe 30 est en position basse et la table est inclinée vers la droite (vue en bout).

Lorsque le vérin 27 est sorti et le vérin 28 rétracté, l'axe 30 est en position médiane et la table 20 est horizontale. Lorsque les deux vérins sont sortis, l'axe 30 est en position haute et la table est inclinée vers la gauche.

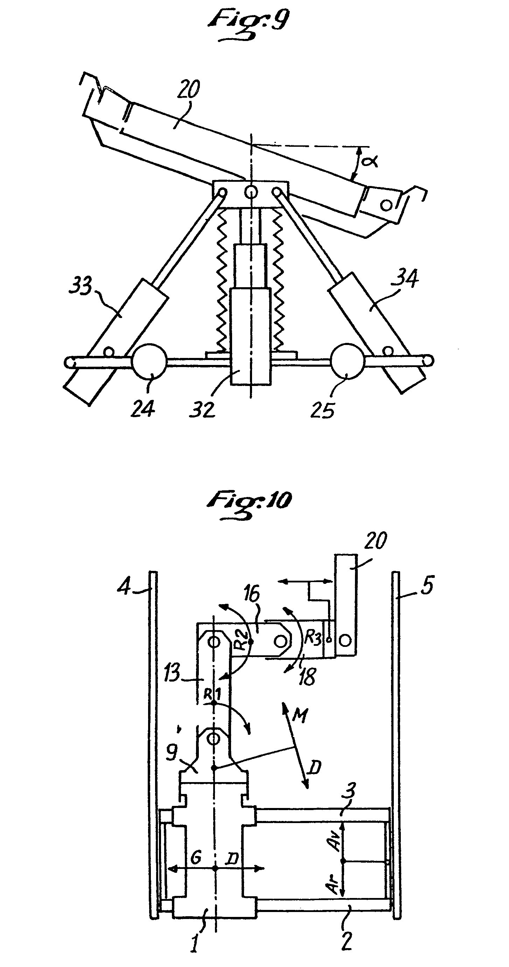

Au cours de ces mouvements d'inclinaison, la table 20 pivote autour d'un axe longitudinal 31 (figure 9) porté par une tête de colonne télescopique 32. Cette tête de colonne télescopique est susceptible d'être soulevée par des vérins de relevage tels que 33 et 34. De ce fait, la table 20 est soulevée pour une course complémentaire verticale dont l'utilité est appréciée dans le chargement des volumes de wagons couverts.

De préférence, les vérins de relevage sont au nombre de quatre.

Lorsque la table de dépose 20 est chargée de trois sacs en long, elle doit les déposer à plat par basculement. A cet effet, elle est munie de vérins de basculement tels que 35 (figure 7), de préférence au nombre de deux, susceptibles de faire basculer la table 20 de façon assez rapide et assez nette pour que les sacs retombent à plat.

Pour assurer ce basculement de la table 20 par rapport à son berceau 36, indifféremment vers la droite ou vers la gauche, l'un des bords 37 de la table 20 est verrouillé sur le berceau tandis que l'autre bord 38 est libéré. Ce verrouillage et cette libération sont assurés au moyen d'une chaîne 39 et d'un vérin 40 dont la tige est solidaire de la chaîne et peut ainsi commander en va-et-vient les mouvements de la chaîne 39. Cette chaîne 39 est guidée sur des galets 41, 42, 43, 44, et elle commande la rotation de manchon tels que 45 et 46 qui sont évidés selon un secteur cylindrique d'environ 60°. Les deux manchons 45 et 46 sont disposés avec leurs ouvertures à 120° l'une de l'autre de sorte que lorsque l'un des manchons présente son ouverture vers le haut pour libérer la table 20 en vue de son basculement, l'autre manchon présente son ouverture vers l'extérieur et le bas de façon à verrouiller le côté correspondant de la table 20. De plus, au repos, les deux côtés de la table 20 sont verrouillés en position.

L'enwagonneuse semi-automatique selon l'invention peut assurer un certain nombre de mouvements, indépendants ou combinés, qui sont symbolisés sur la figure 10. On trouve ainsi:
– un mouvement de translation vers l'avant Av ou vers l'arrière Ar de tout l'ensemble du bâti 1 et de la flèche le long des rails 4, 5,
– un mouvement de translation vers la gauche G ou vers la droite D cu bâti et de la flèche sur les traverses 2, 3,
– un mouvement de montée M et de descente D du corps 9 par rapport au bâti 1,
– un mouvement de rotation R1 de la première flèche 13 par rapport au corps 9,
– un mouvement de rotation R2 de la deuxième flèche 16 par rapport à la première 13,
– un mouvement de rotation R3 de la troisième flèche 18 par rapport à la deuxième 16,
– un mouvement de rotation de la table 20 par rapport à la troisième flèche 18,
– un mouvement télescopique Tr–Ts du tapis transporteur 23 pour rattraper la différence de distance au bord de la table 20 entre la position axiale et la position transversale de la table,
– un mouvement d'inclinaison vers la droite ou vers la gauche de la table 20 de dépose des sacs lorsqu'elle est en position perpendiculaire à la troisième flèche 18,
– un mouvement de basculement, enfin, vers la droite ou vers la gauche pour la dépose des sacs.

Tous ces mouvements peuvent être exécutés de façon automatique, programmée par exemple, ou sur commande de l'opérateur placé au voisinage de la tête de flèche.

Avec l'enwagonneuse selon l'invention, on peut assurer le chargement de wagons de dimensions différentes et en particulier des types G4 et G8. Un wagon de type G4 a une longueur utile d'environ 9,27 m et une ouverture de porte de 2 m; la longueur utile de chacun des volumes droit et gauche du wagon est donc d'environ 3,63 m. Un wagon de type G8 a une longueur utile de 15,50 m, une ouverture de porte de 4 m et des volumes droit et gauche dont la longueur utile est d'environ 5,75 m. Les autres types usuels de wagons ont des volumes de longueur utile moins grande que celle d'un wagon G8 et peuvent donc être chargés sans difficulté. La largeur utile de tous ces wagons est comprise entre 2,6 et 2,7 m environ.

Dans un exemple pratique de réalisation de l'enwagonneuse selon l'invention, les dimensions des différents éléments sont les suivants:

– longueur hors tout avec la table de dépose en position transversale: de 10 à 11,4 m,

   – longueur des rails: de 8,3 à 9,7 m,

   – longueur du bâti: de 2,9 à 4,3 m,

   – longueur du corps entre les colonnes 7, 8 et les pivots 11, 12: 0,9 m,

   – longueur de la première flèche 13 entre les pivots 11, 12 et 14, 15: 2,4 m,

   – longueur de la deuxième flèche 16 entre les pivots 14, 15 et 17: 1,6 m,

   – longueur de la troisième flèche 18 entre les pivots 17 et 19: 1,6 m,

   – demi-largeur de la table de dépose 20: 0,30 m,

   – longueur de la table de dépose 20 au-delà du pivot 19: 2 m,

   – longueur de la table de dépose 20 en deçà du pivot 19: 0,40 m,

   – hauteur hors tout: 2,92 m,

   – course en hauteur de la flèche: 1,4 m,

   – course en largeur de la flèche: 3 m.

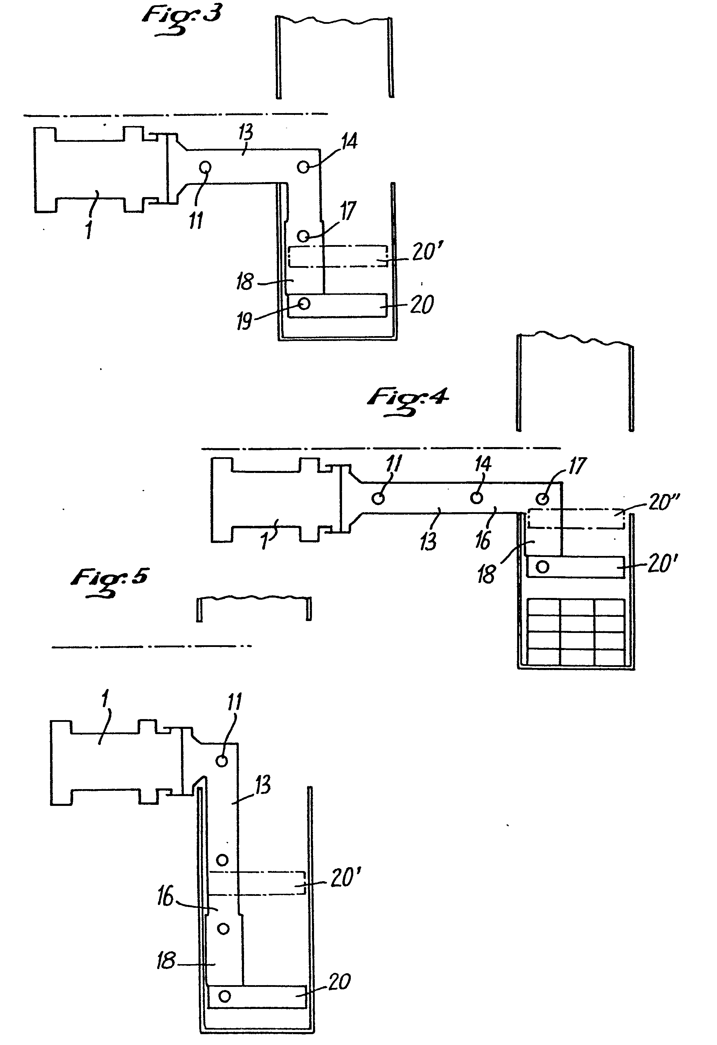

A partir de ces éléments, on voit que pour charger un wagon de type G4 (figure 3) on place à l'intérieur du volume à charger les deuxième et troisième flèches 16 et 18, la table de dépose 20 étant parallèle à la paroi du fond du wagon.

Le système d'approvisionnement de la table de dépose 20 en sacs à charger étant classique et contrôlé par un opérateur placé au voisinage de la table 20, lorsque trois sacs de longueur moyenne 0,8 m sont juxtaposés en long sur la table, celle-ci bascule et les dépose en un premier lit. Automatiquement, la flèche monte d'un pas correspondant à l'épaisseur des sacs et dépose un deuxième lit sur le premier, et ainsi de suite jusqu'à la hauteur maximale possible autorisée par la porte du wagon. A ce stade, l'opérateur commande la surélévation de la table (figure 9) et du fait de sa course verticale complémentaire, la table peut encore déposer un ou deux lits de sacs. Elle est ensuite ramenée à la position basse et la flèche est également ramenée à sa position basse. L'ensemble de la flèche et du bâti se déplace alors d'un pas en largeur parallèlement à l'axe du wagon, avant de recommencer une pile de lits de sacs. Lorsque l'ensemble a chargé quatre piles de lits de sacs, il a reculé d'environ 1,6 m, la largeur des sacs étant de 0,4 m environ. La table de dépose est alors en position 20'.

On sort alors du wagon la deuxième flèche 16, de longueur 1,6 m et on vient replacer l'ensemble vers le volume à charger (figure 4). On recommence le chargement jusqu'à arriver au voisinage immédiat de la porte, la table de dépose se trouvant en position 20''.

On passe alors au chargement de l'autre volume du wagon selon la même méthode et il ne reste plus alors qu'à charger l'espace limité par la porte, ou clé du wagon. A cet effet, on place la flèche entièrement à l'extérieur du wagon et on place la table de dépose 20 dans l'axe de la flèche, à une distance suffisante de la pile de gauche pour pouvoir déposer un premier lit de sacs par basculement vers la gauche. Puis on décale l'ensemble vers la droite d'une largeur de sac et on dépose sur le sol du wagon un deuxième lit de sacs à côté du premier, et ainsi de suite. Lorsqu'on arrive en butée à droite, on monte la flèche d'une épaisseur de sacs, on décale l'ensemble vers la gauche et on dépose par basculement vers la droite un dernier lit de sacs ou deux derniers lits de sacs sur le sol du wagon. On charge ensuite sur le même principe la deuxième couche de sacs et ainsi de suite en montant à chaque fois d'un pas. La flèche effectue alors une largeur de clé dans un sens, puis une autre largeur de sacs en sens inverse, jusqu'en haut de la porte du wagon.

Pour un wagon de type G8 (figure 5), on commence par mettre les trois flèches 13, 16, 18 dans le wagon pour commencer le chargement, puis, lorsque la table arrive en position 20', on retire la première flèche 13 hors du wagon, et on continue à charger le volume jusqu'à la porte.

Pour le chargement de la clé, on place la flèche et la table dans l'axe et on charge comme pour le cas du wagon G4.

Il faut remarquer qu'un lit de sacs n'occupe pas toute la largeur du wagon (figure 4). L'espace compris entre la paroi latérale longitudinale du wagon et la pile de sacs reste libre. Cette disposition évite d'avoir à garnir les parois de wagon de revêtement de protection pour éviter d'abîmer les sacs au cours de leur dépose.

**Revendications**

1. Enwagonneuse semi-automatique, du type comportant un bâti (1) déplaçable dans un plan horizontal, une première flèche (13) articulée sur un corps (9) disposé sur le bâti (1), une deuxième flèche (16) articulée sur la première et une troisième flèche (18) articulée sur la deuxième, les points de pivotement pour chaque articulation étant situés selon un axe vertical, caractérisée en ce que le corps (9) est déplaçable verticalement par rapport au bâti (1), en ce que les points de pivotement entre le corps (9) et la première flèche (13) et ceux entre la première et la deuxième flèche sont situés l'un au-dessus, l'autre en-dessous des tapis transporteurs disposés dans des structures tubulaires constitutives des première et deuxième flèches et du corps (9) et en ce que la troisième flèche (18) est munie d'un tapis télescopique (23).

2. Enwagonneuse selon la revendication 1, caractérisée en ce que la troisième flèche (18) porte une table (20) de dépose des sacs, orientable et susceptible de basculement d'un côté ou de l'autre.

3. Enwagonneuse selon la revendication 2, caractérisée en ce que la table (20) de dépose des sacs est munie de vérins (27, 28) d'inclinaison susceptibles de lui donner une inclinaison à droite ou à gauche.

4. Enwagonneuse selon la revendication 3, caractérisée en ce que la table (20) de dépose des sacs est munie de vérins (33, 34) de relevage susceptibles de la soulever pour une course complémentaire verticale.

5. Enwagonneuse selon la revendication 3, caractérisée en ce que la table (20) de dépose des sacs est munie de vérins (35) de basculement susceptibles d'assurer le basculement de la table autour de l'un de ses bords.

6. Enwagonneuse selon la revendication 5, caractérisée en ce que la table (20) de dépose des sacs comporte des manchons (45–46) évidés selon un secteur cylindrique, leurs ouvertures étant décalées, de sorte pue si une ouverture libère un coté de la table pour autoriser un basculement, l'autre ouverture soit orientée pour assurer un verrouillage de l'autre côté de la table.

## Claims

1. Semi-automatic wagon loading machine, of the type comprising a frame (1) displaceable in a horizontal plane, a first boom (13) pivotably connected to a member (9) arranged on the frame (1), a second boom (16) pivotably connected to the first, and a third boom (18) pivotably connected to the second, the pivoting points for each pivotable connection being situated on a vertical axis, characterised in that the member (9) is displaceable vertically relatively to the frame (1), in that the pivoting points between the member (9) and the first boom (13) and those between the first and second booms are situated one above and the other below conveyor belts situated in tubular structures constituting the first and second booms and the member (9) and in that the third boom (18) is provided with a telescopic belt (23).

2. Wagon loading machine according to claim 1, characterised in that the third boom (18) supports a table (20) for the depositing of bags, which is orientatable and capable of rocking on one side or the other.

3. Wagon loading machine according to claim 2, characterised in that the bag depositing table (20) is provided with jacks (27, 28) for inclination purposes which are adapted to give it an inclination to the right or to the left.

4. Wagon loading machine according to claim 3, characterised in that the bag depositing table (20) is provided with lifting jacks (33, 34) adapted to lift it for complementary travel in the vertical sense.

5. Wagon loading machine according to claim 3, characterised in that the bag depositing table (20) is provided with rocking jacks (35) adapted to effect the rocking of the table about one of its edges.

6. Wagon loading machine according to claim 5, characterised in that the bag depositing table (20) comprises sleeves (45–46) apertured along a sector of a cylinder, their apertures being offset, so that if one aperture frees one side of the table for allowing rocking movement, the other aperture is orientated to ensure the locking of the other side of the table.

## Patentansprüche

1. Halbautomatische Waggonbeladeeinrichtung mit einem in einer Horizontalebene verschiebbaren Gestell (1), einem ersten Ausleger (13), der an einem auf dem Gestell (1), angeordneten Rahmen (9) gelenkig angeschlossen ist, mit einem an dem ersten Ausleger gelenkig angeschlossenen zweiten Ausleger (16) und mit einem an dem zweiten Ausleger gelenkig angeschlossenen dritten Ausleger (18), wobei de Schwenkpunkte eines jeden Gelenkes auf einer Vertikalachse liegen, dadurch gekennzeichnet, dass der Rahmen (9) gegenüber dem Gestell (1) vertikal verschiebbar ist, dass die einen Schwenkpunkte zwischen dem Rahmen (9) und dem ersten Ausleger (13) und die einen Schwenkpunkte zwischen dem ersten und dem zweiten Ausleger oberhalb und die anderen Schwenkpunkte unterhalb von Transportbändern angeordnet sind, die sich in Rohrkonstruktionen befinden, welche Grundbestandteile des ersten und des zweiten Auslegers und des Rahmens (9) sind und dass der dritte Ausleger (18) mit einem ausziehbaren Band (23) versehen ist.

2. Einrichtung nach Anspruch 1, dadurch gekennzeichnet, dass der dritte Ausleger (18) einen Tisch (20) zum Ablagern von Säcken trägt, der nach der einen oder anderen Seite dreh- und schwenkbar ist.

3. Einrichtung nach Anspruch 2, dadurch gekennzeichnet, dass der Tisch (20) zum Ablagern von Säcken mit Neigungszylindern (27, 28) versehen ist, die ihm eine Neigung nach rechts oder links geben können.

4. Einrichtung nach Anspruch 3, dadurch gekennzeichnet, dass der Tisch (20) zum Ablagern von Säcken mit Hubzylindern (33, 34) versehen ist, die geeignet sind, ihn um einen zusätzlichen Vertikalhub anzuheben.

5. Einrichtung nach Anspruch 3, dadurch gekennzeichnet, dass der Tisch (20) zum Ablagern von Säcken mit Schwenkzylindern (35) versehen ist, die den Tisch um einen seiner Ränder schwenken können.

6. Einrichtung nach Anspruch 5, dadurch gekennzeichnet, dass der Tisch (20) zum Ablagern von Säcken Hülsen (45, 46) aufweist, die nach einem Zylindersektor ausgeschnitten sind, deren Öffnungen derart gegeneinander versetzt sind, dass, wenn eine Öffnung eine Seite des Tisches freigibt, um eine Schwenkbewegung zu ermöglichen, die andere Öffnung so ausgerichtet ist, dass sie eine Verriegelung der anderen Seite des Tisches gewährleistet.

## Fig. 1a

## Fig. 2a

Fig.1b

Fig:2b

*Fig.3*

*Fig.4*

*Fig.5*

11

*Fig. 6*

*Fig. 7*

*Fig. 8*

*Fig:9*

*Fig:10*